# EUROPÄISCHE PATENTSCHRIFT

(11) **EP 2 890 472 B1**
(45) Veröffentlichungstag und Bekanntmachung des Hinweises auf die Patenterteilung: **07.07.2021**
(21) Anmeldenummer: 13745821.2
(22) Anmeldetag: 01.08.2013
(51) Int. Cl.: B01D 36/00, B01D 29/21, B01D 29/52, B01D 29/54, B01D 29/90

(54) **FILTERELEMENT SOWIE FILTEREINRICHTUNG**
FILTER ELEMENT AND FILTER DEVICE
ELÉMENT FILTRANT ET DISPOSITIF FILTRANT

(30) Priorität: 30.08.2012 DE 102012017140
(43) Veröffentlichungstag der Anmeldung: 08.07.2015
(73) Patentinhaber: MANN+HUMMEL GmbH, 71636 Ludwigsburg (DE)
(72) Erfinder: KOCKSCH, Christian, 67354 Römerberg (DE)
(86) Internationale Anmeldenummer: PCT/EP2013/066181
(87) Internationale Veröffentlichungsnummer: WO 2014/032902

(56) Entgegenhaltungen:
- EP-A1- 0 773 053
- EP-A1- 1 520 609
- WO-A1-00/47310
- WO-A1-01/19490
- WO-A1-2011/060254
- DE-A1- 19 939 970
- DE-A1-102009 061 063
- US-A1- 2011 088 662
- None

## Beschreibung

### Technisches Gebiet

Die vorliegende Erfindung bezieht sich auf ein Filterelement zum Filtern eines Fluids, insbesondere einer Harnstofflösung, sowie auf eine Filtereinrichtung, insbesondere eine Harnstofffiltereinrichtung.

### Stand der Technik

Beispielsweise finden bei der Abgasbehandlung in Kraftfahrzeugen zur Reduzierung von Stickoxidemission Harnstofflösungen Verwendung. Harnstofflösung wird dabei über Düsen im Abgasstrang eingespritzt. Insbesondere um ein Verstopfen der Düsen zu verhindern, muss die Harnstofflösung gefiltert werden. Oft wird ein zur Filtration einer Harnstofflösung geeigneter Filter auch Harnstofffilter genannt.

Zum Filtern der Harnstofflösung ist es bekannt, ein Filterelement zu verwenden, welches saugseitig mit Vakuum oder Unterdruck appliziert oder beaufschlagt wird. Das Vakuum bedingt ein Ausgasen der Harnstofflösung, so dass sich im höchsten Bereich des Filterelements bzw. einer das Filterelement aufnehmenden Filtereinrichtung Gase ansammeln. Wichtig ist es, die angesammelten Gase in Form kleiner Blasen aus dem Filterelement bzw. der Filtereinrichtung herauszuführen, um die Funktion nachgeordneter Komponenten, insbesondere der erwähnten Düsen, nicht zu stören.

Aus EP 0 773 053 A1 ist ein Filter für in einen geschlossenen Behälter zurückfließende Flüssigkeit bekannt, wobei der Filterkopf einen Aufnahmeraum für ein ringförmiges Entlüftungsfilterelement aufweist.

In DE 199 39 970 A1 ist ein Ölfilter mit einem Filterelement offenbart, dessen Filtermedium feinporig ausgebildet ist und sowohl Schmutz als auch Luft aus dem Öl abscheiden kann. Die abgeschiedene Luft gelangt durch eine offenporige Scheibe in einen Sammelraum, welcher oberhalb des Filterelements angeordnet ist.

In WO 2000 047 310 A1 ist ein Filteraufsatz zur Vakuumfiltration wässriger Medien für den Laborbetrieb beschrieben. Das Filterelement weist einen rohrförmigen hydrophilen mikroporösen Membranfilter auf, der an beiden Stirnseiten von Endkappen mit zentralen Öffnungen fluiddicht eingefasst ist, wobei die untere Öffnung mit einem Gehäuseauslass verbunden ist. Die zentrale Öffnung der oberen Endkappe ist von einer hydrophoben Membran verschlossen.

WO 2001 019 490 A1 offenbart ein Verfahren zur Filtration einer Schlämme mittels eines Tiefenfiltrationsmediums. Abstandshalter teilen das Filtermedium in Filtersegmente und definieren Strömungspfade.

EP 1 520 609 A1 beschreibt ein Verfahren und eine Vorrichtung zum Separieren und Abführen von Gasblasen aus Flüssigkeiten, wobei die Flüssigkeit radial umgelenkt wird. Die Flüssigkeit wird einem Eintrittsfilter zugeführt, gelangt dann in eine Entlüftungskammer, aus der Gas durch Gastrennmaterial entweichen kann, und tritt durch einen Austrittsfilter aus hydrophilem, Poren oder kleine Kanäle bildenden Material aus.

US 2011/0088662 A1 offenbart ein Verfahren zur Konfektionierung einer Membran für ein Entlüftungsventil.

Ein weiterer Aspekt, welchen es bei der Entwicklung von Filterelementen für Harnstofflösung zu berücksichtigen gilt, ist der, dass Harnstofflösungen bei ca. -11°C gefrieren. Hierzu ist es beispielsweise aus der WO 2010/139706 A1 bekannt, einen Kompensationskörper aus elastisch deformierbarem Material vorzusehen. Der Kompensationskörper nimmt ein sich beim Gefrieren der Harnstofflösung vergrößerndes Volumen auf.

Auch in WO 2011/060254 A1 ist ein Flüssigkeitsfilter mit einer Schutzvorrichtung zur Verhinderung von Schäden beim Gefrieren der Flüssigkeit im Filtergehäuse beschrieben. Die Schutzvorrichtung umfasst ein gasgefülltes kompressibles Element, das im Filtergehäuse angeordnet ist und das Aufbauen eines gefährlichen Drucks im Gehäuse verhindert.

### Offenbarung der Erfindung

Eine Aufgabe der vorliegenden Erfindung besteht darin, ein verbessertes Filterelement sowie eine verbesserte Filtereinrichtung bereitzustellen. Insbesondere besteht eine Aufgabe der vorliegenden Erfindung darin, das Ansammeln großer Gasblasen in dem Filterelement bzw. in der Filtereinrichtung zumindest zu reduzieren.

Zur Lösung dieser Aufgabe wird ein Filterelement zum Filtern eines Fluids, insbesondere einer Harnstofflösung, nach Anspruch 1 vorgeschlagen. Das Filterelement umfasst ein flüssigkeitsdurchlässiges und gasundurchlässiges, erstes Filtermedium und ein flüssigkeitsundurchlässiges und gasdurchlässiges zweites Filtermedium. Das erste und zweite Filtermedium sind jeweils zwischen einer Roh- und einer Reinseite des Filterelements angeordnet.

Das Filterelement umschließt ringförmig einen Innenraum und ist von einer Rohseite zu einer Reinseite parallel durch mindestens das erste und das zweite Filtermedium durchströmbar, die jeweils zwischen der Roh- und einer Reinseite des Filterelements angeordnet sind, wobei das erste Filtermedium flüssigkeitsdurchlässig und gasundurchlässig ist und das zweite Filtermedium flüssigkeitsundurchlässig und gasdurchlässig ist.

Während dem ersten Filtermedium die Aufgabe zukommt, das Fluid, insbesondere die Harnstofflösung, zu reinigen, d.h. insbesondere ungewünschte Partikel aus dieser herauszufiltern, wird mit dem zweiten Filtermedium bezweckt, einen kontinuierlichen Transport von kleinen Gasblasen von der Rohseite zur Reinseite des Filterelements zu bewerkstelligen. Dadurch wird das Ansammeln großer Gasmengen im Filterelement bzw. in einer das Filterelement aufnehmenden Filtereinrichtung verhindert.

Das erste Filtermedium ist beispielsweise grundsätzlich gasdurchlässig, wird jedoch im vollgesaugten Zustand durch die Oberflächenspannung des Fluids, insbesondere der Harnstofflösung, gesperrt. Das zweite Filtermedium ist beispielsweise grundsätzlich flüssigkeitsdurchlässig, dies jedoch erst ab einem vorbestimmten Differenzdruck, welcher größer als ein Betriebsdifferenzdruck ist, der an dem zweiten Filtermedium im Betrieb des Filterelements anliegt.

Bevorzugt ist das zweite Filtermedium (geodätisch) höher angeordnet als das erste Filtermedium.

Das Fluid ist eine Flüssigkeit, insbesondere eine Harnstofflösung.

Das erste Filtermedium kann beispielsweise als Vlies, Gelege oder Gewebe ausgebildet sein. Weiterhin kann das erste Filtermedium gefaltet, beispielsweise in Form eines Balgs, vorgesehen sein. Ferner kann das erste Filtermedium Papier aufweisen.

Das zweite Filtermedium kann beispielsweise aus Polytetraflurethylen (PTFE) ausgebildet sein.

Gemäß einer Ausführungsform ist das erste Filtermedium hydrophil oder oleophil und das zweite Filtermedium hydrophob oder oleophob ausgebildet. Dadurch wird erreicht, dass sich das erste Filtermedium mit Wasser (hiervon sind ganz allgemein auch Lösungen in Wasser umfasst) bzw. Öl (hiervon sind ganz allgemein auch Lösungen in Öl umfasst) vollsaugt und so eine Sperrwirkung gegenüber dem Durchtritt von Gasen durch das erste Filtermedium erzeugt wird. Dagegen kann Wasser oder Öl (hier gilt entsprechend auch die Verallgemeinerung hin zu Lösungen in Wasser bzw. in Öl) nicht in das zweite Filtermedium eindringen, so dass dieses durchlässig für einen Durchtritt von Gasen bleibt.

Gemäß einer weiteren Ausführungsform ist das erste Filtermedium oberhalb eines ersten Differenzdrucks gasundurchlässig und flüssigkeitsdurchlässig und das zweite Filtermedium unterhalb eines zweiten Differenzdrucks gasdurchlässig und flüssigkeitsundurchlässig, wobei der zweite Differenzdruck größer als der erste Differenzdruck ist und ein Betriebsdifferenzdruck, bei welchem das Filterelement betreibbar ist, zwischen dem ersten und dem zweiten Differenzdruck liegt. Dadurch wird erreicht, dass die Flüssigkeit, insbesondere die Harnstofflösung, lediglich durch das erste Filtermedium dringt und von diesem gefiltert wird. Das zweite Filtermedium dagegen bleibt für die Flüssigkeit undurchlässig. Das erste Filtermedium weist dann die erwähnte Sperrwirkung gegenüber Gasen auf, während das zweite Filtermedium die Gase durchlässt, insbesondere in Form kleiner Blasen. Der Betriebsdifferenzdruck liegt vorzugsweise in einem Bereich zwischen 0 und 0,7 bar.

In einer Ausführungsform ist vorgesehen, dass das erste Filtermedium ringförmig geschlossen ist und sternförmig gefaltet oder gewickelt den Innenraum des Filterelements umschließt.

Erfindungsgemäß ist an einer oder beiden Stirnseiten des ringförmig geschlossenen ersten Filtermediums eine Endscheibe angeordnet, die zum Abdichten der Stirnfläche des ersten Filtermediums dient. In einer Endscheibe ist bevorzugt ein Anschluss zum Abführen gefilterten Fluids oder Zuführen von zu filterndem Fluid vorgesehen.

Das zweite Filtermedium ist in einer Öffnung in einer Endscheibe angeordnet. Da die Endscheibe das ringförmige Filtermedium axial abschließt, ist damit das zweite Filtermedium auch an einem axialen Ende bzw. der Stirnseite des durch das ringförmige erste Filtermedium gebildeten Filterkörpers angeordnet. Das Filterelement kann so vertikal in einem Filter verwendet werden, wobei das Ende mit dem zweiten Filtermedium nach oben weist. Im Filter nach oben steigendes Gas kann somit oberhalb des ersten Filtermediums durch das zweite Filtermedium abgeführt werden.

Gemäß einer weiteren Ausführungsform ist das zweite Filtermedium in einer Öffnung eines von einer Endscheibe abragenden Kragens des Filterelements ausgebildet, welcher einen Anschluss des Filterelements zum Abführen gefilterten Fluids oder Zuführen von zu filterndem Fluid bildet. Dadurch, dass das zweite Filtermedium bzw. die Öffnung, welche das zweite Filtermedium verschließt, in dem Kragen des Filterelements angeordnet ist, ist das zweite Filtermedium (geodätisch) hoch angeordnet. Insbesondere ist die Öffnung bzw. das zweite Filtermedium somit oberhalb des ersten Filtermediums angeordnet. Gas, welches von Haus aus zum (geodätisch) höchsten Punkt wandert, kann so von dem ersten Filtermedium ferngehalten und in unmittelbare Nachbarschaft des zweiten Filtermediums gebracht werden.

Beispielsweise können auch mehrere Öffnungen vorgesehen sein, welche jeweils von einem zweiten Filtermedium verschlossen sind.

Gemäß einer weiteren Ausführungsform ist die Öffnung als Langloch ausgebildet. Dadurch kann eine vergleichsweise große Öffnung geschaffen werden. Das Langloch erstreckt sich vorzugsweise in Umfangsrichtung des Kragens.

Gemäß einer weiteren Ausführungsform durchdringt die Öffnung den Kragen radial. Dadurch ist die Öffnung für das Gas leicht erreichbar.

Gemäß einer weiteren Ausführungsform ist das zweite Filtermedium in den Kragen eingespritzt. Dies kann im Kunststoffspritzgussverfahren erfolgen. Dadurch ergibt sich ein einfacher Herstellungsprozess.

Gemäß einer weiteren Ausführungsform ist auf der Rohseite ein Kompensationselement derart vorgesehen, dass bei einem Einfrieren des Fluids verbleibendes Restfluid durch das zweite Filtermedium oder ein drittes Filtermedium hindurch in einen Spalt zwischen dem zweiten Filtermedium oder dem dritten Filtermedium und dem Kompensationselement strömt. Dieser Spalt kann von Haus aus vorgesehen sein oder sich erst dadurch ergeben, dass das Kompensationselement zurückweicht, wenn das Restfluid durch das zweite oder dritte Filtermedium auf die Rohseite strömt. Das Kompensationselement weist bevorzugt ein Elastomer auf. Das Kompensationselement kann weiterhin geschlossenporig und/oder geschäumt ausgebildet sein. Die Poren können mit Luft gefüllt sein. Bevorzugt weist das Kompensationselement einen Ethylen-Propylen-DienKautschuk (auch als "EPDM" bezeichnet) und/oder einen hydrierten Acryl-Nitril-Butadien-Kautschuk (auch als "HBNR" bezeichnet) auf. Das Kompensationselement kann in Bezug auf das zweite Filtermedium einen Abstand zwischen 0 und 20 mm, bevorzugt zwischen 0 und 10 mm, aufweisen. Es können mehrere Kompensationselemente vorgesehen sein.

Gemäß einer weiteren Ausführungsform ist das Kompensationselement als Isolator ausgebildet. Dadurch kann die räumliche Anordnung des noch nicht gefrorenen Restfluids in dem Filterelement derart gesteuert werden, dass sich dieses in einem Bereich angrenzend an das zweite oder dritte Filtermedium auf der Reinseite ansammelt. Die gewünschte Isolatoreigenschaft des Kompensationselements kann beispielsweise dadurch bereitgestellt werden, dass dieses EPDM oder HBNR aufweist.

Gemäß einer weiteren Ausführungsform ist ein Kompensationselement vorgesehen, welches einen die Öffnung mit der Rohseite verbindenden Kanal aufweist. Dadurch wird ein einfacher Transport von Gasen hin zu dem zweiten Filtermedium gewährleistet. Der Kanal kann beispielsweise zwischen dem Kompensationselement und einem weiteren Element, beispielsweise einer oberen Endscheibe des Filterelements, gebildet sein. Alternativ kann der Kanal auch mittels einer Durchgangsöffnung im Kompensationselement selbst gebildet sein.

Gemäß einer weiteren Ausführungsform ist das Filterelement als Harnstofffilterelement ausgebildet.

Weiterhin wird eine Filtereinrichtung, insbesondere eine Harnstofffiltereinrichtung, mit dem erfindungsgemäßen Filterelement vorgeschlagen.

Die Filtereinrichtung kann ein Gehäuse aufweisen, in welchem das Filterelement aufgenommen ist. Beispielsweise kann das Gehäuse einen Anschluss aufweisen, welcher abdichtend mit dem Anschluss des Filterelements verbindbar ist. Insbesondere kann der Kragen des Filterelements in den Anschluss der Filtereinrichtung abdichtend eingeschoben werden.

Außerdem kann die Filtereinrichtung Mittel, insbesondere eine Pumpe, aufweisen, um das Filterelement auf der Reinseite mit Vakuum zu beaufschlagen.

Gemäß einer weiteren Ausführungsform ragt der Kragen nach oben. Das heißt, dass das Filterelement in der Filtereinrichtung derart angeordnet bzw. in diese eingesetzt ist, dass der Kragen nach (geodätisch) oben zeigt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Filterelements oder der Filtereinrichtung. Dabei wird der Fachmann auch Einzelaspekte als Verbesserungen oder Ergänzungen zu der jeweiligen Grundform der Erfindung hinzufügen oder abändern.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 in einer Schnittansicht eine Filtereinrichtung gemäß einer Ausführungsform;
Fig. 2 ein Filterelement der Filtereinrichtung aus Fig. 1 in einer Schnittdarstellung, wobei jedoch der Schnitt durch eine Ebene senkrecht zu der in Fig. 1 dargestellten Ebene gezeigt ist; und
Fig. 3 das Filterelement der Fig. 1 und 2 in einer perspektivischen Darstellung.

In den Figuren bezeichnen gleiche Bezugszeichen gleiche oder funktionsgleiche Elemente, soweit nichts Gegenteiliges angegeben ist.

### Ausführungsform(en) der Erfindung

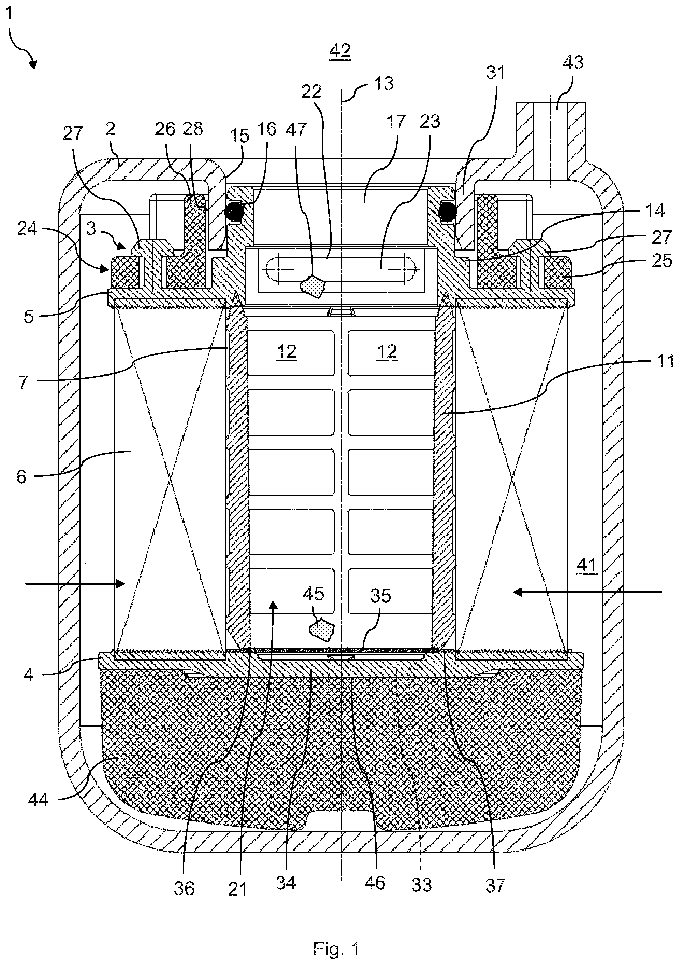

Fig. 1 zeigt in einer Schnittansicht eine Filtereinrichtung 1 gemäß einer Ausführungsform.

Die Filtereinrichtung 1 kann beispielsweise in einem Kraftfahrzeug vorgesehen sein. Die Filtereinrichtung 1 kann dazu eingerichtet sein, eine Flüssigkeit, insbesondere eine Harnstofflösung, zu reinigen.

Die Filtereinrichtung 1 umfasst ein Gehäuse 2, in welchem ein Filterelement 3 angeordnet ist. Das Filterelement 3 umfasst eine erste, untere Endscheibe 4 und eine zweite, obere Endscheibe 5. Zwischen den beiden Endscheiben 4, 5 ist ein erstes Filtermedium 6 in Form eines Balgs angeordnet. Der Balg bzw. das erste Filtermedium 6 weist beispielsweise im Querschnitt (senkrecht zur Papierebene) einen ringförmigen Querschnitt auf und ist an seinen gegenüberliegenden Enden mit den Endscheiben 4, 5 fluiddicht verschweißt. In dem von dem ersten Filtermedium 6 umschlossenen Innenraum 7 ist ein Stützkörper in Form eines Mittelrohrs 11 angeordnet. Das Mittelrohr 11 weist radiale Durchbrüche 12 hin zu dem ersten Filtermedium 6 auf. "Radial", "axial" und "in Umfangsrichtung" beziehen sich auf eine Mittelachse 13 des Filterelements 3.

Von der Endscheibe 5 erstreckt sich ein axialer Kragen 14 des Filterelements 3 in eine Anschlussöffnung 15 des Gehäuses 2 hinein und dichtet gegen diese, beispielsweise mittels eines O-Rings 16 außenseitig ab. Das Filterelement 3 ist lösbar in der Anschlussöffnung 15 befestigt und kann bei Bedarf ausgetauscht werden. Der Kragen 14 weist eine Öffnung 17 auf, welche mit dem Inneren 21 des Mittelrohrs 11 flüssigkeitsleitend in Verbindung steht.

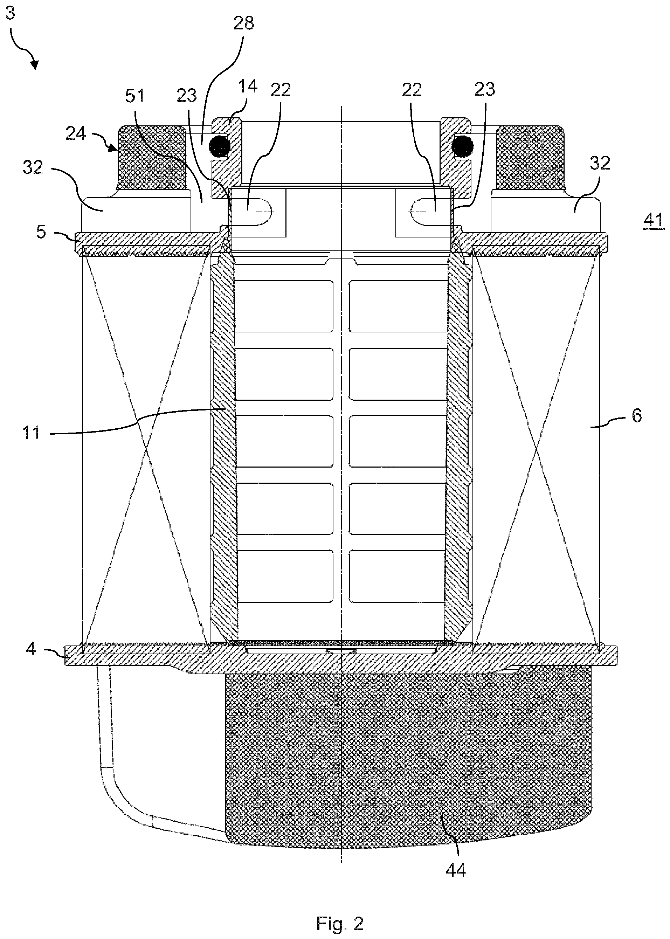

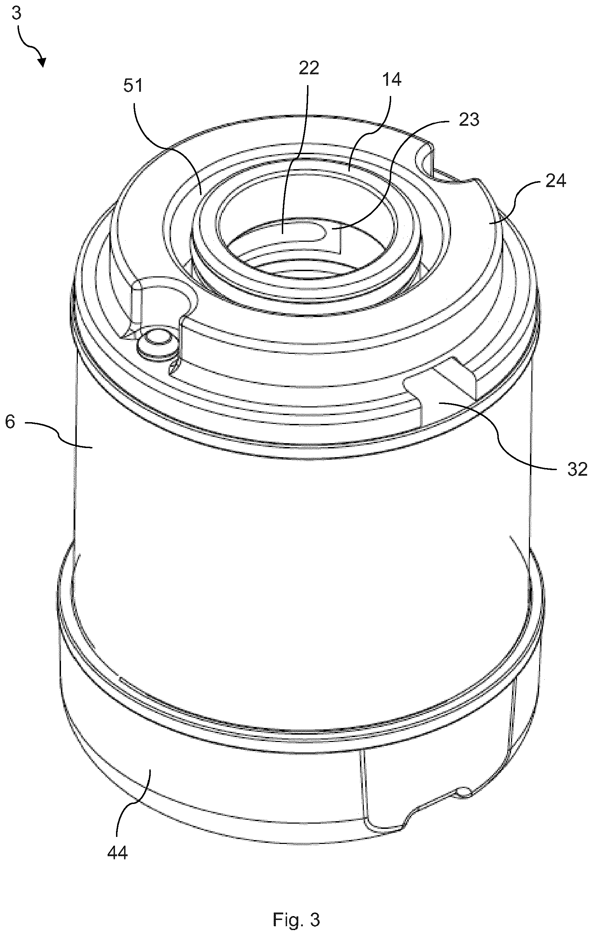

Fig. 2 zeigt das Filterelement 3 aus Fig. 1 isoliert und in einem Schnitt senkrecht zu der in Fig. 1 dargestellten Ebene. Fig. 3 zeigt das Filterelement 3 aus den Fig. 1 und 2 in einer perspektivischen Darstellung von schräg oben. Anhand der Fig. 2 und 3 wird nachfolgend insbesondere der Aufbau des Kragens 14 näher erläutert.

Der Kragen 14 weist beispielsweise zwei, sich jeweils in Umfangsrichtung erstreckende Langlöcher 22 auf. Die Langlöcher 22 bilden jeweils Durchgangsöffnungen durch den Kragen 14 in radialer Richtung. Die Langlöcher 22 sind, wie in Fig. 2 zu erkennen, jeweils von einem zweiten Filtermedium 23 verschlossen. Die zweiten Filtermedien 23 sind jeweils in den Kragen 14 eingespritzt. Während das erste Filtermedium 6 aus einem hydrophilen Material, beispielsweise Papier, ausgebildet ist, sind die zweiten Filtermedien 23 jeweils aus einem hydrophoben Material ausgebildet. Dazu können die zweiten Filtermedien 23 aus PTFE ausgebildet sein. Die Langlöcher 22 und damit die zweiten Filtermedien 23 sind in der dargestellten Betriebsstellung des Filterelements 3 (geodätisch) höher angeordnet als das erste Filtermedium 6.

Weiterhin weist das Filterelement 3 ein erstes Kompensationselement 24 auf. Das Kompensationselement 24 setzt sich aus einem radialen Abschnitt 25 und einem axialen Abschnitt 26 zusammen. Der radiale Abschnitt 25 liegt auf der Endscheibe 5 oberseitig auf und kann mit Hilfe von Zapfen 27 mit dieser formschlüssig verbunden sein. Der axiale Abschnitt 26 erstreckt sich parallel zu dem Kragen 14, so dass sich ein Ringspalt 28 ergibt, in dem ein die Anschlussöffnung 15 ausbildender Stutzen 31 des Gehäuses 2 aufgenommen ist, siehe Fig. 1.

Wie in Fig. 2 und 3 zu erkennen, sind in dem ersten Kompensationselement 24 zwei Kanäle 32 in Form von Nuten gebildet, welche sich jeweils radial hin zu den Langlöchern 22 bzw. den zweiten Filtermedien 23 erstrecken. Unterseitig wird ein jeweiliger Kanal 23 von der oberen Endscheibe 5 begrenzt.

Die untere Endscheibe 4 kann, wie beispielsweise in Fig. 1 gezeigt, eine Öffnung 33 aufweisen. In der Öffnung 33 ist jedoch ein Kreuz 34 angeordnet, so dass die Öffnung 33 in Fig. 1 nur angedeutet werden kann. Das Kreuz 34 schützt ein drittes, optional vorgesehenes Filtermedium 35 vor einer manuellen Beschädigung. Das dritte Filtermedium 35 ist in Bezug auf das Kreuz 34 innenseitig, d.h. auf der Seite des Inneren 21, angeordnet. Die Öffnung 33 ist von dem dritten Filtermedium 35 verschlossen. Das dritte Filtermedium 35 ist gemäß dem Ausführungsbeispiel ebenfalls hydrophil ausgeführt. Beispielsweise kann das dritte Filtermedium 35 aus einem Polyamidvlies gebildet sein. Das dritte Filtermedium 35 ist mit dem Mittelrohr 11, beispielsweise durch Umspritzen des dritten Filtermediums 35, verbunden. Ferner ist das dritte Filtermedium 35 in seinem Randbereich 36 umlaufend mit einem die Öffnung 33 begrenzenden Randbereich 37 der Endscheibe 4 verschweißt.

Die Filtermedien 6, 23 und 35 unterteilen die Filtereinrichtung 1 in eine Rohseite 41 und eine Reinseite 42. Auf der Rohseite 41 befindet sich zu reinigende Flüssigkeit, insbesondere Harnstofflösung, welche im Betrieb der Filtereinrichtung 1 beispielsweise über einen Anschluss 43 (siehe Fig. 1) zugeführt wird und dabei im Wesentlichen ausschließlich das erste Filtermedium 6 durchströmt und dabei gereinigt wird. Die Flüssigkeit gelangt so zur Reinseite 42 und wird dort beispielsweise einem Abgasstrang des Kraftfahrzeugs zugeführt. Auf der Reinseite 42 kann eine Pumpe zum Anlegen eines Vakuums an das Filterelement 3 bzw. an dessen Inneres 21 vorgesehen sein.

Das Anlegen des Vakuums führt dazu, dass die Flüssigkeit ausgast und sich damit Gas in einem (geodätisch) hohen Bereich der Filtereinrichtung 2 ansammelt. Das erste Filtermedium 6 ist dabei im Wesentlichen für das Gas undurchdringbar, da sich dieses mit der Flüssigkeit vollsaugt und damit eine Barriere bildet. Die zweiten Filtermedien 23 dagegen weisen die Flüssigkeit ab und sind für die Gase durchlässig. Gas auf der Rohseite 41 kann so durch die Kanäle 32 den Langlöchern 22 bzw. den Filtermedien 23 zugeführt werden und dort in Form von kleinen Blasen durch die Filtermedien 23 hindurch treten und dem Abgasstrang in unschädlicher Weise zugeführt werden. Die Betriebsdruckdifferenz, welche an die Filtermedien 6, 23, 35 angelegt wird, ist beispielsweise in einem Bereich zwischen 0 und 0,7 bar (Vakuumbetrieb) gewählt. Das erste Filtermedium 6 (und gegebenenfalls das dritte Filtermedium 35) ist beispielsweise oberhalb einer Druckdifferenz von 0 bar flüssigkeitsdurchlässig, während die zweiten Filtermedien 23 erst ab einem Druck von beispielsweise 1,0 bar flüssigkeitsdurchlässig werden. Dies führt dann zu dem Effekt, dass im Betrieb der Filtereinrichtung 1 Flüssigkeit lediglich durch das erste Filtermedium 6 (und gegebenenfalls durch das dritte Filtermedium 35, wobei jedoch auf Grund seiner Auslegung nur sehr wenig Flüssigkeit durch dieses strömt) strömt und Gas über die zweiten Filtermedien 23 über die Öffnung 17 abgegeben werden.

Zusätzlich zu dem ersten Kompensationselement 24 kann das Filterelement 3 ein zweites Kompensationselement 44 unterhalb der unteren Endscheibe 4 aufweisen. Das zweite Kompensationselement 44 kann ebenfalls aus EPDM gebildet sein. Ist die Filtereinrichtung 1 beispielsweise im Winter sehr kalten Bedingungen ausgesetzt, so kann es zu einem Gefrieren der Flüssigkeit, insbesondere der Harnstofflösung, in dem Gehäuse 2 kommen. Das Gefrieren findet in der in Fig. 1 durch mehrere Pfeile angedeuteten Richtung von außen nach innen statt. Die Kompensationskörper 24, 44 sind dazu eingerichtet, ein sich beim Gefrieren der Flüssigkeit, insbesondere der Harnstofflösung, vergrößerndes Flüssigkeitsvolumen aufzunehmen. Darüber hinaus kann vorgesehen sein, dass eine Restflüssigkeit 45 aufgrund der Isolatorwirkung des Kompensationselements 44 zuletzt gefriert. Ein Druckaufbau, welcher mit einem Gefrieren der Restflüssigkeit 45 einhergeht und das Filterelement 3 beschädigen könnte, wird dadurch vermieden, dass die Restflüssigkeit 45 durch das dritte Filtermedium 35 in einen Spalt 46 zwischen der Endscheibe 4 und dem Kompensationselement 44 strömen kann. Im Ausgangszustand, d.h. vor Einfrieren der Restflüssigkeit 45, kann das Kompensationselement 44 beispielsweise direkt gegen die Endscheibe 4 anliegen, wie in Fig. 1 gezeigt. Der Spalt 46 bildet sich dann nach und nach mit dem Ausströmen der Restflüssigkeit 45 durch das dritte Filtermedium 35.

Genauso könnte auch vorgesehen sein, dass beim Gefrieren eine Restflüssigkeit 47 nach und nach durch die zweiten Filtermedien 23 in einen Ringspalt 51 zwischen dem Kompensationskörper 24 und dem Kragen 14, siehe Fig. 2 und 3, abfließt, um einen Druckaufbau im Inneren 21 des Filterelements 3 zu verhindern und damit eine Beschädigung des Filterelements 3 zu vermeiden.

Das vorstehend erwähnte Prinzip ist auch auf Öle oder auf Öl basierenden Flüssigkeiten anwendbar. In diesem Fall ist das erste Filtermedium 6 oleophil und das zweite Filtermedium 23 oleophob ausgebildet.

## Patentansprüche

1. Filterelement (3) zum Filtern einer Flüssigkeit, insbesondere einer Harnstofflösung, wobei das Filterelement ringförmig einen Innenraum umschließt und von einer Rohseite (41) zu einer Reinseite (42) parallel durch mindestens ein erstes (6) und ein zweites (23) Filtermedium durchströmbar ist, die jeweils zwischen der Roh- und der Reinseite (41, 42) des Filterelements (3) angeordnet sind, wobei das erste Filtermedium (6) flüssigkeitsdurchlässig und gasundurchlässig ist und das zweite Filtermedium (23) flüssigkeitsundurchlässig und gasdurchlässig ist, und wobei das erste Filtermedium (6) an einer oder beiden Stirnseiten eine Endscheibe (5) aufweist und das zweite Filtermedium (23) in einer Öffnung (22) in einer Endscheibe (5) angeordnet ist.

2. Filterelement nach Anspruch 1, wobei das erste Filtermedium (6) hydrophil oder oleophil und das zweite Filtermedium (23) hydrophob oder oleophob ausgebildet ist.

3. Filterelement nach Anspruch 1 oder 2, wobei das erste Filtermedium (6) oberhalb eines ersten Differenzdrucks gasundurchlässig und flüssigkeitsdurchlässig und das zweite Filtermedium (23) unterhalb eines zweiten Differenzdrucks gasdurchlässig und flüssigkeitsundurchlässig ist, wobei der zweite Differenzdruck größer als der erste Differenzdruck ist und ein Betriebsdifferenzdruck, bei welchem das Filterelement (3) betreibbar ist, zwischen dem ersten und dem zweiten Differenzdruck liegt.

4. Filterelement nach einem der vorhergehenden Ansprüche, wobei das erste Filtermedium (6) ringförmig geschlossen ist und sternförmig gefaltet oder gewickelt den Innenraum umschließt.

5. Filterelement nach einem der vorangehenden Ansprüche, wobei das zweite Filtermedium (23) in einer Öffnung (22) eines von einer Endscheibe (5) abragenden Kragens (14) des Filterelements (3) ausgebildet ist, welcher einen Anschluss des Filterelements (3) zum Abführen gefilterten Fluids oder Zuführen von zu filterndem Fluid bildet.

6. Filterelement nach einem der vorangehenden Ansprüche, wobei die Öffnung (22) als Langloch ausgebildet ist.

7. Filterelement nach Anspruch 5 oder 6, wobei die Öffnung (22) den Kragen (14) radial durchdringt.

8. Filterelement nach einem der Ansprüche 1 bis 5, wobei das zweite Filtermedium (23) in die Endscheibe (5) oder den Kragen (14) eingespritzt ist.

9. Filterelement nach einem der Ansprüche 1 bis 5, wobei auf der Rohseite (41) ein Kompensationselement (24, 44) derart vorgesehen ist, dass bei einem Einfrieren des Fluids verbleibendes Restfluid (45, 47) durch das zweite Filtermedium (23) oder ein drittes Filtermedium (35) hindurch in einem Spalt (46, 51) zwischen dem zweiten Filtermedium (23) oder dem dritten Filtermedium (35) und dem Kompensationselement (24, 44) strömt.

10. Filterelement nach einem der Ansprüche 1 bis 6, wobei ein Kompensationselement (24) vorgesehen ist, welches einen die Öffnung (22) mit der Rohseite (41) verbindenden Kanal (32) aufweist.

11. Filterelement nach einem der Ansprüche 1 bis 10, wobei das Filterelement (3) als Harnstofffilterelement ausgebildet ist.

12. Filtereinrichtung (1), insbesondere Harnstofffiltereinrichtung, mit einem Filterelement (3) nach einem der Ansprüche 1 bis 11.

13. Filtereinrichtung nach Anspruch 12, wobei das zweite Filtermedium (23) in einer Öffnung eines von einer Endscheibe (5) abragenden Kragens (14) des Filterelements (3) ausgebildet ist, welcher einen Anschluss des Filterelements (3) zum Abführen gefilterten Fluids oder Zuführen von zu filterndem Fluid bildet, wobei der Kragen (14) nach oben, insbesondere von dem ersten Filtermedium (6) weg, ragt.

## Claims

1. Filter element (3) for filtering a liquid, in particular an urea solution, wherein the filter element annularly encloses an interior space and can be flowed through from a raw side (41) to a clean side (42) in parallel through at least a first (6) and a second (23) filter medium which are each disposed between the raw side and the clean side (41, 42) of the filter element (3), wherein the first filter medium (6) is liquid-permeable and gas-impermeable and the second filter medium (23) is liquid-impermeable and gas-permeable, and wherein the first filter medium (6) features an end disc (5) on one or both front faces and the second filter medium (23) is disposed in an opening (22) in an end disc (5).

2. Filter element according to claim 1, wherein the first filter medium (6) is hydrophilic or oleophilic and the second filter medium (23) is hydrophobic or oleophobic.

3. Filter element according to claim 1 or 2, wherein the first filter medium (6) is gas-impermeable and liquid-permeable above a first differential pressure and the second filter medium (23) is gas-permeable and liquid-impermeable below a second differential pressure, wherein the second differential pressure is higher than the first differential pressure and an operating differential pressure, which allows the filter element (3) to be operable, is situated between the first and the second differential pressure.

4. Filter element according to one of the preceding claims, wherein the first filter medium (6) is annularly closed and surrounds the interior space in a star-shape folded or wound manner.

5. Filter element according to one of the preceding claims, wherein the second filter medium (23) is realized in an opening (22) of a collar (14) of the filter element (3) projecting from an end disc (5), said collar forming a connection of the filter element (3) for discharging filtered fluid or supplying fluid to be filtered.

6. Filter element according to one of the preceding claims, wherein the opening (22) is designed as long hole.

7. Filter element according to claim 5 or 6, wherein the opening (22) radially penetrates the collar (14).

8. Filter element according to one of the claims 1 to 5, wherein the second filter element (23) is injected into the end disc (5) or the collar (14).

9. Filter element according to one of the claims 1 to 5, wherein a compensation element (24, 44) is provided on the raw side (41) in such a way that, when the fluid is freezing up, remaining residual fluid (45, 47) flows through the second filter medium (23) or a third filter medium (35) into a gap (46, 51) between the second filter medium (23) or the third filter medium (35) and the compensation element (24, 44).

10. Filter element according to one of the claims 1 to 6, wherein a compensation element (24) is provided which features a conduit (32) connecting the opening (22) to the raw side (41).

11. Filter element according to one of the claims 1 to 10, wherein the filter element (3) is designed as urea filter element.

12. Filtering device (1), in particular urea filtering device, having a filter element (3) according to one of the claims 1 to 11.

13. Filtering device according to claim 12, wherein the second filter medium (23) is realized in an opening of a collar (14) of the filter element (3) projecting from an end disc (5), said collar forming a connection of the filter element (3) for discharging filtered fluid or supplying fluid to be filtered, wherein the collar (14) projects upwards, in particular away from the first filter medium (6).

## Revendications

1. Élément filtrant (3) destiné à la filtration d'un liquide, notamment d'une solution d'urée, l'élément filtrant entourant un espace intérieur de manière annulaire et pouvant être parcouru, d'un côté brut (41) vers un côté pur (42), parallèlement par au moins un premier (6) milieu filtrant et un deuxième (23) milieu filtrant qui sont disposés respectivement entre le côté brut et le côté pur (41, 42) de l'élément filtrant (3), le premier milieu filtrant (6) étant perméable aux liquides et imperméable aux gaz et le deuxième milieu filtrant (23) étant imperméable aux liquides et perméable aux gaz, et le premier milieu filtrant (6) comportant un disque d'extrémité (5) sur une face frontale ou sur les deux faces frontales et le deuxième milieu filtrant (23) étant disposé dans une ouverture (22) dans un disque d'extrémité (5).

2. Élément filtrant selon la revendication 1, le premier milieu filtrant (6) étant hydrophile ou oléophile et le deuxième milieu filtrant (23) étant hydrophobe ou oléophobe.

3. Élément filtrant selon la revendication 1 ou 2, le premier milieu filtrant (6) étant imperméable aux gaz et perméable aux liquides en dessus d'une première pression différentielle et le deuxième milieu filtrant (23) étant perméable aux gaz et imperméable aux liquides en dessous d'une seconde pression différentielle, la seconde pression différentielle étant supérieure à la première pression différentielle et une pression différentielle d'exploitation à laquelle l'élément filtrant (3) peut être utilisé étant située entre la première pression différentielle et la seconde pression différentielle.

4. Élément filtrant selon l'une des revendications précédentes, le premier milieu filtrant (6) étant fermé de manière annulaire et, plié en forme d'étoile ou enroulé, entourant l'espace intérieur.

5. Élément filtrant selon l'une des revendications précédentes, le deuxième milieu filtrant (23) étant exécuté dans une ouverture (22) d'un collet (14) de l'élément filtrant (3) faisant saillie d'un disque d'extrémité (5), ce collet constituant un raccord de l'élément filtrant (3) permettant d'évacuer du fluide filtré ou d'introduire du fluide à filtrer.

6. Élément filtrant selon l'une des revendications précédentes, l'ouverture (22) étant exécutée en tant que trou oblong.

7. Élément filtrant selon la revendication 5 ou 6, l'ouverture (22) traversant le collet (14) en sens radial.

8. Élément filtrant selon l'une des revendications 1 à 5, le deuxième milieu filtrant (23) étant injecté dans le disque d'extrémité (5) ou le collet (14).

9. Élément filtrant selon l'une des revendications 1 à 5, un élément de compensation (24, 44) étant prévu du côté brut (41) de manière à ce que, en cas de gel du fluide, du fluide résiduel (45, 47) coule à travers le deuxième milieu filtrant (23) ou un troisième milieu filtrant (35), dans un interstice (46, 51) ménagé entre le deuxième milieu filtrant (23) ou le troisième milieu filtrant (35) et l'élément de compensation (24, 44).

10. Élément filtrant selon l'une des revendications 1 à 6, un élément de compensation (24) comportant un canal (32) reliant l'ouverture (22) au côté brut (41) étant prévu.

11. Élément filtrant selon l'une des revendications 1 à 10, l'élément filtrant (3) étant exécuté en tant qu'élément filtrant pour urée.

12. Dispositif de filtration (1), notamment dispositif de filtration pour urée, ayant un élément filtrant (3) selon l'une des revendications 1 à 11.

13. Dispositif de filtration selon la revendication 12, le deuxième milieu filtrant (23) étant exécuté dans une ouverture d'un collet (14) de l'élément filtrant (3) faisant saillie d'un disque d'extrémité (5), le collet constituant un raccord de l'élément filtrant (3) permettant d'évacuer du fluide filtré ou d'introduire du fluide à filtrer, le collet (14) dépassant vers le haut, notamment en s'écartant du premier milieu filtrant (6).
